# EUROPEAN PATENT SPECIFICATION

(11) **EP 3 294 790 B1**
(45) Date of publication and mention of the grant of the patent: **07.08.2019**
(21) Application number: 16730059.9
(22) Date of filing: 06.05.2016
(51) Int. Cl.: C08G 65/26, C09K 17/18

(54) **PROCESS FOR INCREASING THE WETTING RATE OF HYDROPHOBIC MEDIA WITH A WETTING COMPOSITION**
VERFAHREN ZUR ERHÖHUNG DER BENETZUNGSGESCHWINDIGKEIT VON HYDROPHOBEN MEDIEN MIT EINER BENETZUNGSZUSAMMENSETZUNG
PROCÉDÉ POUR AUGMENTER LE TAUX DE MOUILLAGE DE MILIEUX HYDROPHOBES AVEC UNE COMPOSITION DE MOUILLAGE

(30) Priority: 08.05.2015 US 201562159003 P
(43) Date of publication of application: 21.03.2018
(73) Proprietor: BASF SE, 67056 Ludwigshafen (DE)
(72) Inventor: NIEDZWIECKI, Daniel, Trenton, MI 48183 (US); ROH, Yeonsuk, Canton, MI 48188 (US); ERICKSON, John P., Southgate, MI 48195 (US)
(74) Representative: Zumstein, Angela
(86) International application number: PCT/US2016/031228
(87) International publication number: WO 2016/182918

(56) References cited:
- WO-A1-03/031536
- GB-A- 2 181 736
- US-A- 2 867 944
- US-A1- 2014 270 984

## Description

### BACKGROUND OF THE INVENTION

### 1. Field of the Invention

The instant disclosure generally relates to a wetting composition and to a process for increasing the wetting rate of hydrophobic media with the wetting composition as described in the present claiims.

### 2. Description of the Related Art

The availability of fresh water is a rising concern in many industries. Therefore, the minimization of water use is an important consideration for many applications, especially in the agricultural, landscaping, and construction industries. As one example, in the agricultural industry, the availability of fresh water to successfully grow and maintain crops and landscaping is a rising concern. Irrigation methods in the agricultural and landscaping industries generally have poor efficiency because the growing media (e.g. soil, sand, peat) is hydrophobic and, thus, contributes to loss of water through runoff and evaporation. Accordingly, it is desirable to maximize water uptake and minimize evaporation to increase the availability of irrigation water and "naturally sourced" water, such as rain and dew, for uptake by botanical articles, such as agricultural crops, grass, and decorative plants. As another example, in the construction industry, airborne dust is often annoying and can cause health problems or damage to machinery. Water is often used for dust control at construction sites or on dirt roads, both of which often comprise hard packed, hydrophobic media. However, atmospheric dust may become a problem upon drying of wetted surfaces such that it is desirable to maximize the uptake and minimize the evaporation of the water to lengthen the time period over which dust control treatment is effective.

Accordingly, there remains an opportunity to provide a method for increasing the wetting rate of hydrophobic media.

### SUMMARY OF THE INVENTION AND ADVANTAGES

The present disclosure provides a process for increasing the wetting rate of hydrophobic media with a wetting composition. The process includes the steps of combining water and a heteric polyol to form the wetting composition, aging the wetting composition for at least four hours to increase the cloud point of the wetting composition to greater than 23°C, and applying the wetting composition to the hydrophobic media. The heteric polyol has a number average molecular weight (Mn) of from 1,000 to 6,000, an HLB value of from 2 to 6, and a hydroxyl functionality of two or greater. Further, the heteric polyol has the following formula:

X[Y(CH₂CH₂O)ₐ(CH₂CHCH₃O)_{b}H]_{c}

wherein X is an organic core derived from an initiator having at least two hydroxyl groups; Y is a heteric copolymer comprising at least two different alkyleneoxy units selected from the group of ethyleneoxy units, propyleneoxy units, and butyleneoxy units; the subscripts a and b are independently zero or a positive integer and at least one of a or b must be a positive integer; and the subscript c is an integer of two or greater.

In the process, the wetting composition quickly infiltrates hydrophobic media without runoff. Once treated, the water loss of hydrophobic media due to runoff is decreased and the moisture retention level of the hydrophobic media is increased.

### BRIEF DESCRIPTION OF THE DRAWINGS

Other advantages of the present disclosure will be readily appreciated, as the same becomes better understood by reference to the following detailed description when considered in connection with the accompanying drawings wherein:
Figure 1 is a line graph illustrating the impact of treating soil with a wetting composition including various amounts of Example 2 on the yield of cotton lint (lb lint/acre) produced by cotton plants grown in the treated soil.
Figure 2 is a bar graph illustrating the impact of treating soil with a wetting composition including various amounts of Examples 2 and 5 on the yield of cotton lint (lb lint/acre) produced by cotton plants grown in the treated soil.
Figure 3 is a graphical analysis illustrating the water infiltration time of water into soil treated with a wetting composition including various amounts of Example 2 and Comparative Examples 2-8.
Figure 4 is a graphical analysis illustrating the infiltration depth of a wetting composition including Example 2, a wetting composition including Comparative Example 3, and a Control (i.e., water).
Figure 5 is a bar graph illustrating the water runoff of a wetting composition including Example 2, a wetting composition including Comparative Example 3, and a Control (i.e., water).
Figure 6 is a bar graph illustrating the water infiltration time of water into soil treated with various amounts of Example 2 over a 10-week time period.
Figure 7 is a bar graph illustrating the water infiltration time of water into soil treated with various amounts of Comparative Example 7 over a 10-week time period.

### DETAILED DESCRIPTION OF THE INVENTION

A process for increasing the wetting rate of hydrophobic media with a wetting composition is provided. Also provided is a wetting composition including a heteric polyol, which increases the wetting rate and water retention of hydrophobic media.

In certain embodiments, the heteric polyol has the following formula:

X[Y(CH₂CH₂O)ₐ(CH₂CHCH₃O)_{b}H]_{c}

wherein
X is an organic core derived from an initiator having at least 2 hydroxyl groups, alternatively at least 3 hydroxyl groups, alternatively 3 hydroxyl groups;
Y is a heteric copolymer comprising at least two different alkyleneoxy units selected from the group of ethyleneoxy units, propyleneoxy units, and butyleneoxy units;
the subscripts a and b are independently zero or a positive integer and at least one of a or b must be a positive integer; and
the subscript c is an integer of 2 or greater, alternatively 3 or greater, alternatively 3.

As set forth above, the initiator reacts to form the organic core (X) of the heteric polyol. In certain embodiments, X may be derived from a difunctional alcohol (i.e., an organic reactive alcohol having two reactive hydroxyl groups), or a higher functional alcohol (i.e., an organic reactive alcohol having three or more reactive hydroxyl groups). In certain embodiments, X is derived from a saturated alcohol, but in certain other embodiments may be derived from an unsaturated alcohol or derived from a combination of saturated and unsaturated alcohols.

In certain embodiments, X is derived from a mixture of at least two organic alcohols having a different number of reactive functional hydroxyl groups.

Representative monofunctional alcohols include simple primary alcohols having the general formula RCH2OH, secondary alcohols having the general formula RR'CHOH, or tertiary alcohols having the general formula RR'R"COH, where R, R', and R" represent alkyl groups.

Representative simple difunctional alcohols, or diols include simple chemical compounds containing two hydroxyl groups, such as ethylene glycol, 1,4 butanediol, propylene 1,3 diol, and the like.

Representative simple higher functional alcohols, such as triols, tetraols and higher functional alcohols, include glycerol, pentaerythritol, and the like. In a preferred embodiment, the initiator comprises or is glycerine/glycerol.

As set forth above, the alkylene oxide is reacted with the initiator to form the heteric copolymer portion (Y) of the heteric polyol. Y is a heteric copolymer comprising at least two different alkyleneoxy units/groups selected from the group of ethyleneoxy units, propyleneoxy units, and butyleneoxy units. For purposes of the subject disclosure the word "heteric" describes polymers (e.g. the heteric polyol) as including or comprising at least two different alkyleneoxy units which are polymerized in a random distribution. The word "heteric" may describe a given portion of a polymer, a branch or branches of a polymer, or the entire polymer excluding its core.

Y can comprise heteric and uniform blocks of alkyleneoxy units. For example, Y can comprise a random combination of ethyleneoxy units and propyleneoxy units. As another example, Y can comprise a blocked combination of ethyleneoxy units and propyleneoxy units. Y can comprise a blocked combination (blocks) of ethyleneoxy units and propyleneoxy units, so long as one of the blocks is heteric. As yet another example, Y can comprise a segment comprising a random combination of ethyleneoxy units and propyleneoxy units and also blocks of ethyleneoxy units and propyleneoxy units.

In various embodiments, Y comprises ethyleneoxy units and propyleneoxy units. In this embodiment Y comprises ethyleneoxy units in an amount of from 2 to 80, alternatively from 2 to 60, alternatively from 2 to 40, alternatively from 2 to 35, alternatively from 2 to about 30, alternatively from 2 to 25, alternatively from 2 to 20, alternatively from 2 to 18, alternatively from 2 to 16, alternatively from 2 to 14, alternatively from 4 to 14, alternatively from 6 to 14, alternatively from 8 to 14, alternatively from 4 to 10, percent by weight, based on 100 parts by weight of the reactants reacted to form the heteric polyol. Of course, Y also comprises the remaining propyleneoxy units in an amount such that the total percent by weight alkyleneoxy units add up to 100%, based on 100 parts by weight of the reactants reacted to form the heteric polyol.

The segment -(CH₂CH₂O)ₐ(CH₂CHCH₃O)_{b}H of the heteric polyol represents the end capping of the heteric polyol. In various embodiments, the subscript b is zero and subscript a is a positive integer. That is, the heteric polyol is end capped with ethyleneoxy units which are derived from the alkoxylation reaction of ethylene oxide (EO).

In various embodiments, the subscript a is zero and subscript b is a positive integer. That is, the heteric polyol is end capped with propyleneoxy units which are derived from the alkoxylation reaction of propylene oxide (PO). In certain embodiments, (CH₂CHCH₃O)_{b} comprises less than 20, alternatively less than 18, alternatively less than 16, alternatively less than 14, alternatively less than 12, alternatively less than 10, alternatively less than about 8, alternatively less than 6, alternatively less than 4, percent by weight, based on 100 parts by weight of the reactants reacted to form the heteric polyol. Stated another way, in certain embodiments, the polyol composition is end capped with the amounts set forth above of (CH₂CHCH₃O) units which are derived from the alkoxylation reaction of propylene oxide.

In various embodiments, the heteric polyol comprises ethyleneoxy units and propyleneoxy units in a molar ratio of from 1:25 to 1:4, alternatively from 1:11 to 2:5.

In various embodiments, the heteric polyol has a number average molecular weight (Mₙ) of from 1,000 to 6,000, alternatively from 2,700 to 3,300, alternatively from 2,700 to 3,100, alternatively from 2,800 to 6,000, alternatively from 2,800 to 3,000, g/mol. In various embodiments, the heteric polyol has a number average molecular weight (Mₙ) of 1,000, alternatively 1,500, alternatively 2,000, alternatively 2,500, alternatively 2,800, alternatively 3,000, alternatively 4,100, alternatively 6,000, g/mol. Molecular weight as used herein is the number average molecular weight (Mₙ) which is defined as the statistical average molecular weight of all the polymer chains in the sample, and is defined with the formula Mₙ = ∑NᵢMᵢ/∑Nᵢ where Mᵢ is the molecular weight of a chain and Nᵢ is the number of chains of that molecular weight. Mₙ can be predicted by polymerization mechanisms and is measured by methods that determine the number of molecules in a sample of a given weight; for example, colligative methods such as end-group assay. There are equal numbers of molecules on either side of Mₙ in the distribution. Further, all molecular weights set forth herein are in g/mol.

In various embodiments, the heteric polyol has an HLB value of from 2 to 6, alternatively from 2.5 to 4.0, alternatively from 2.5 to 3.5, alternatively from 2.5 to 3.1, alternatively from 2.5 to 3.0. In various embodiments, the heteric polyol has an HLB value of 1.8, alternatively 2.5, alternatively 2.6, alternatively 2.85, alternatively 3.0. HLB value as used herein is calculated based on William C. Griffin's formula for non-ionic surfactants. William C. Griffin's HLB formula is the percent of total hydrophile divided by 5 to standardize the value against a scale of 20. The percent hydrophile in EO/PO copolymers is defined as the total sum of percent EO and the percent of polyhydric alcohols (i.e. glycerol).

In various embodiments, the heteric polyol has a hydroxyl functionality of two or greater, alternatively from 2.5 or greater, alternatively 2.8 or greater, alternatively 3.0 or greater, alternatively 3.5 or greater, alternatively from 2.5 to about 3.1. In various embodiments, the heteric polyol has a hydroxyl functionality of 2.5, alternatively 2.6, alternatively 2.9, alternatively 3.0. The hydroxyl functionality as used herein is the number of hydroxy groups on a molecule. An average functionality of the molecules included in a sample of the Heteric Polyol is used herein and calculated with the following formula: Average Functionality = Total Moles OH / Total Moles Polyol. As such, the hydroxyl functionality of the heteric polyol does not have to be a whole number and is, in many cases, reported as a number including a fraction such as 2.85.

One exemplary, non-limiting heteric polyol comprises the reaction product of (i) 1.5 to 5 % by weight of glycerine, (ii) 10 to 15% by weight of ethylene oxide, and (iii) 82 to 97% by weight of propylene oxide, wherein the % by weight of components (i)-(iii) is based on 100 parts by weight of the reactants reacted to form the heteric polyol. In certain embodiments, this heteric polyol is capped with 10% by weight (e.g. from 8 to 15 % by weight of propylene oxide, has a hydroxyl functionality of 3 (e.g. from 2.6 to 3.2), and has a number average molecular weight (Mn) of about 3000 g/mol (e.g. from 2500 to 3500 g/mol).

Another exemplary, non-limiting heteric polyol comprises the reaction product of (i) 1.5 to 3.5% by weight of glycerine, (ii) 9 to 15% by weight of ethylene oxide, and (iii) 82 to 88% by weight of propylene oxide, wherein the % by weight of components (i)-(iii) is based on 100 parts by weight of the reactants reacted to form the heteric polyol.

The process optionally includes the step of preparing the heteric polyol according to the formula X[Y(CH₂CH₂O)ₐ(CH₂CHCH₃O)_{b}H]_{c}. In this step, an initiator having at least two hydroxyl groups is introduced into a reactor. To make the Y (the heteric copolymer portion) of the molecule, at least two of ethylene oxide (EO), propylene oxide (PO), and butylene oxide (BO) are introduced into the reactor at the same time or at different times and in different sequences, at the desired inclusion rates of each one individually. These molecules will react via an alkoxylation reaction to produce a larger molecule with reactive OH units. Once this molecule is formed, EO or PO may be introduced into the reactor (but not at the same time) to produce a molecule that now has a block of repeating EO or PO units. That is, the heteric copolymer portion may be capped with EO and/or PO units.

Further, the process includes the steps of combining water and the heteric polyol to form the wetting composition, aging the wetting composition for an amount of time sufficient to increase the cloud point of the wetting composition to greater than about 23°C, and applying the wetting composition to the hydrophobic media.

In various embodiments, the step of combining water and the heteric polyol to form the wetting composition is further defined as combining the water in an amount of from 2,000 to 8,000 ppm, alternatively from about 2,000 to about 6,000 alternatively from 2,000 to 4,000 ppm, with a ppm basis of parts by weight of the heteric polyol per 1 part by weight of the wetting composition.

Of course, various embodiments of the wetting composition can further include additional components and additives (e.g. surfactants, colorants, antifoaming agents, additives, etc.). However, various embodiments of the wetting composition may consist of, or consist essentially of, the heteric polyol and water. As used herein, "consisting essentially of' is meant to exclude any element or combination of elements, as well as any amount of any element or combination of elements, that would alter the basic and novel characteristics of the wetting composition.

Once the water and heteric polyol are combined to form the wetting composition, the wetting composition is aged for an amount of time sufficient to increase the cloud point of the wetting composition to greater than 23°C. In various embodiments, the step of aging the wetting composition for an amount of time sufficient to increase the cloud point of the wetting composition to greater than 23°C is further defined as aging the wetting composition at least 4, alternatively at least 8, alternatively at least 12, alternatively at least 16, alternatively at least 20, alternatively at least 24, alternatively at least 48, alternatively at least 72, alternatively at least 96, alternatively at least 120, alternatively at least 144, alternatively at least 168, alternatively at least 192, alternatively at least 216, hours. It is believed that the performance of the wetting composition (e.g. infiltration time reduction) is improved by aging the wetting composition before the step of applying the wetting composition to the hydrophobic media. Without being bound by theory, it is believed that aging the wetting composition for an amount of time sufficient to increase the cloud point of the wetting composition to greater than 23°C significantly improves the wetting composition performance (infiltration time). It is observed that the wetting composition, which includes the heteric polyol and water, changes visibly overtime. Specifically, the opacity or visible clouding of the wetting composition including the heteric polyol and water increases or decreases after preparation of the wetting composition. Without being bound by theory, it is believed that the inherent solubility of the heteric polyol in water gradually increases with extended water-heteric polyol interaction time. The optimal time between sample preparation and sample application is a minimum of about 4 to about 24 hours; contingent upon variations with molecular weight and heteric polyol type. This relationship is described in the Examples below.

The process also includes the step of applying the wetting composition to the hydrophobic media. The hydrophobic media is generally defined as any media which exhibits any resistance to wetting with water. That is, any media that does not absorb water in any amounts. The hydrophobic media typically includes varying amounts and types of soil, sand, and peat. Various soils include soil types found in various locations in the United States, such as Dinuba soil, Los Banos soil, Lubbock soil, and Nebraska soil. In one embodiment, the hydrophobic media includes soil, sand, peat, and combinations thereof.

Of course, the step of applying the wetting composition to the hydrophobic media can be conducted for purposes including, but not limited to, dust abatement, hydration, and inhibition of solidification of liquid and/or semi-solid compositions (e.g., through extended hydration).

Once applied, the wetting composition functions to increase the infiltration time of the composition and water thereafter, and also to slow the rate of evaporation or loss of water from the hydrophobic media. Upon application, the wetting composition modifies the surface character of the hydrophobic media such that the hydrophobic character of the media is masked and the overall hydrophilicity of the media is improved. Even after evaporation or loss of water, the residual heteric polyol remains in the hydrophobic media. As such, the residual heteric polyol remaining in the hydrophobic media can allow absorption and retention of water subsequently applied to the hydrophobic media. Accordingly, the wetting composition is ideal for applications in which it would be desirable to slow evaporation or loss of polar liquids from soil samples, such as in the agricultural, botanical, and construction industries.

In the agricultural industry, the availability of fresh water in order to successfully grow and maintain crops is a rising concern. The wetting composition described herein significantly reduces the hydrophobicity of soils, peats, and sands. When used in agricultural applications, the step of applying the wetting composition to the hydrophobic media can be further defined as applying the heteric polyol in an amount of from 50 to 500, alternatively from 50 to 200, alternatively from 80 to 116, Oz./acre. At these application amounts, appreciable improvement to the overall efficacy of water infiltration is observed. Advantageously, the wetting composition allows for more effective and uniform irrigation at reduced water application rates to promote improved plant health and economic sustainability.

Infiltration rate as used herein is measured with "a modified straw test". In this test method, 3 mL syringes fitted with 23 G1 hypodermic needles are employed. Each syringe holds a disc of Whatman 542 filter paper and houses 35 mm of hydrophobic sand. The sand's water repellant character is determined by treatment with trichloro octadecyl silane according to Bauters, et al., 1998 Soil Sci. Soc. Am. J. 62:1185-1190. The efficacy of the prepared sand is verified by measuring the infiltration time of deionized water. Without the heteric polyol, deionized water does not wet or penetrate the hydrophobic sand within 9 days of the initial application. In this method, the infiltration time is measured as the time lapsed from the initial sample application, through the wetting of 35 mm of sand, and to the moment when one drop of sample solution first eludes the prepared syringe needle. Various wetting compositions including the heteric polyol in the concentrations and ranges described above are aged for at least 24 hours and tested. A 1 mL sample of the wetting composition is applied to the surface of the prepared syringes or columns. Deionized water is used as the control/standard for comparison. Each wetting composition is tested 4 times - the infiltration times set forth below are an average of the four measurements. In various embodiments, the wetting composition has a hydrophobic media infiltration rate of less than 5, alternatively less than 4, alternatively less than 3, alternatively less than 2, alternatively less than about 1, alternatively less than 0.5, minutes, at concentrations of less than 8,000 ppm, alternatively less than 7,000 ppm, alternatively less than 6,000 ppm, alternatively less than 5,000 ppm, alternatively less than 4,000 ppm, alternatively less than 3,000 ppm, alternatively less than 2,000 ppm, or at concentrations of 8,000 ppm, alternatively 7,000 ppm, alternatively 6,000 ppm, alternatively 5,000 ppm, alternatively about 4,000 ppm, alternatively 3,000 ppm, alternatively 2,000 ppm, with a ppm basis of parts by weight heteric polyol per 1 part by weight of the wetting composition.

Water loss due to runoff as used herein is measured with a 12 inch PVC column packed with a mixture of 95% sand and 5% screened sphagnum peat. At a depth of 1 to 2 inches from the top of the column, a layer of 100 % sphagnum peat is packed while the top inch of the column is packed with a the sand/peat mixture described above. Once prepared, the wetting composition (at the prescribed concentration) is applied to the column in an amount of 100 mL solutions of deionized water, where the tested wetting agent is prepared to 0.1% active ingredient. Of course, an untreated control, i.e., deionized water is also typically tested for comparative purposes. Wetting efficacy is determined by the measured depth of infiltration throughout the column and the percent of total soil water measured at each layer of the column. Percent of total soil water is calculated gravimetrically for each layer by measuring the pre- and post- treated weight of each layer disassembled. Water loss due to runoff is determined by the average percent of water absent from the total moisture of the column given the total weight of the treated solution. In various embodiments, the wetting composition has a water runoff percentage of less than 15, alternatively less than 10, alternatively less than 5, alternatively less than 4, alternatively less than 3, alternatively less than 2, alternatively less than 1, alternatively less than 0.5, %, at concentrations of less than 8,000 ppm, alternatively less than 7,000 ppm, alternatively less than 6,000 ppm, alternatively less than 5,000 ppm, alternatively less than 4,000 ppm, alternatively less than 3,000 ppm, alternatively less than 2,000 ppm, or at concentrations of 8,000 ppm, alternatively 7,000 ppm, alternatively 6,000 ppm, alternatively 5,000 ppm, alternatively 4,000 ppm, alternatively 3,000 ppm, alternatively 2,000 ppm, with a ppm basis of parts by weight heteric polyol per 1 part by weight of the wetting composition.

The following examples are intended to illustrate the invention and are not to be viewed as limiting to the invention.

### EXAMPLES

### Preparation of wetting compositions comprising a heteric polyol according to the formula:

X[Y(CH₂CH₂O)ₐ(CH₂CHCH₃O)_{b}H]_{c}

In general, the method for preparing the heteric polyol according to the formula X[Y(CH₂CH₂O)ₐ(CH₂CHCH₃O)_{b}H]_{c} is as follows. First, an initiator having at least two hydroxyl groups is introduced into a reactor. To make the Y (the heteric copolymer portion) of the new molecule, at least two of ethylene oxide (EO), propylene oxide (PO), and butylene oxide (BO) are introduced into the reactor at the same time (or at different times and in different sequences, at the desired inclusion rates of each one individually). These molecules will react in order via an alkoxylation reaction to produce a larger molecule with reactive OH units. Once this molecule is formed, EO or PO may be introduced into the reactor (but not at the same time) to produce a molecule that now has a block of repeating EO or PO units. That is, the heteric copolymer portion may be capped with EO and/or PO units.

Once formed, the heteric polyol is combined with water at the amount required to form Examples having the desired ppm. Examples 1-7 are set forth in Table 1 below. Table 1 includes HLB value, hydroxyl functionality, molecular weight, and structural characteristics of each respective Heteric Polyol as well as an infiltration time of various wetting compositions is described in Table 1.

HLB value is calculated based on William C. Griffin's formula for non-ionic surfactants. William C. Griffin's HLB formula is the percent of total hydrophile divided by 5 to standardize the value against a scale of 20. The percent hydrophile in EO/PO copolymers is defined as the total sum of percent EO and the percent of polyhydric alcohols (i.e. glycerol).

The hydroxyl functionality is the number of hydroxy groups on a molecule. An average functionality of the molecules included in a sample of the Heteric Polyol is used herein and calculated with the following formula: Average Functionality = Total Moles OH / Total Moles polyol.

Molecular weight is number average molecular weight (Mₙ) which is defined as the statistical average molecular weight of all the polymer chains in the sample, and is defined by Mn = ∑NᵢMᵢ/∑Nᵢ where Mi is the molecular weight of a chain and Ni is the number of chains of that molecular weight. Mₙ can be predicted by polymerization mechanisms and is measured by methods that determine the number of molecules in a sample of a given weight; for example, colligative methods such as end-group assay. There are equal numbers of molecules on either side of Mₙ in the distribution. Further, all molecular weights set forth herein are in g/mol.

Wetting composition performance is completed with "a modified straw test". Instead of using household drinking straws, 3 mL syringes fitted with 23 G1 hypodermic needles are employed. Each syringe holds a disc of Whatman 542 filter paper and houses 35 mm of hydrophobic sand. The sand's water repellant character is achieved by treatment with trichloro octadecyl silane according to Bauters, et al., 1998 Soil Sci. Soc. Am. J. 62:1185-1190. The efficacy of the prepared sand is verified by measuring the infiltration time of deionized water. Without an active wetting agent, deionized water does not wet or penetrate the hydrophobic sand within 9 days of the initial application. In this method, the infiltration time is measured as the time lapsed from the initial sample application, through the wetting of 35 mm of sand, and to the moment when one drop of sample solution first eludes the prepared syringe needle. Various wetting compositions including the Heteric Polyols described above at concentrations of 2000, 5000, and 8000 ppm in deionized water are aged for at least 24 hours and tested. A 1 mL sample of each wetting composition is applied to the surface of the prepared syringes or columns. Deionized water is used as the control/standard for comparison. Each wetting composition is tested 4 times - the infiltration times set forth below are an average of the four measurements.

**TABLE 1**

| Example No. | Molecular Weight (g/mol) | Funct. | HLB Value | Concentration in DI Water (ppm) | | |
|---|---|---|---|---|---|---|
| | | | | 2000 | 5000 | 8000 |
| | | | | Infiltration Time (sec) | | |
| Heteric Polyols having the following formula: X[Y(CH₂CH₂O)ₐ(CH₂CHCH₃O)_{b}H]_{c}, wherein Y is a heteric random copolymer and a is 0, b is a positive integer and c an integer of 2 or more (i.e. the heteric polyol is PO end capped). | | | | | | |
| Example 1 Heteric Polyol 1 | 3000 | 3 | 2 | 67 | 36 | 33 |
| Example 2 Heteric Polyol 2 | 3000 | 3 | 2.6 | 55 | 36 | 34 |
| Example 3 Heteric Polyol 3 | 3000 | 3 | 3 | 61 | 38 | 35 |
| Example 4 Heteric Polyol 4 | 3000 | 3 | 5.6 | 289 | 105 | 71 |
| Heteric Polyols having the following formula: X[Y(CH₂CH₂O)ₐ(CH₂CHCH₃O)_{b}H]_{c}, wherein Y is a heteric random copolymer and a or b is 0, and C is an integer of 2 or more (i.e. the heteric polyol is not end capped). | | | | | | |
| Example 5 Heteric Polyol 5 | 2803 | 2.85 | 3 | 50 | 37 | 33 |
| Heteric Polyols having the following formula: X[Y(CH₂CH₂O)ₐ(CH₂CHCH₃O)_{b}H]_{c}, wherein Y is a heteric block copolymer and a or b is 0, and C is an integer of 2 or more (i.e. the heteric polyol is not end capped). | | | | | | |
| Example 6 Heteric Polyol 6 | 4129 | 2.58 | 3 | 67 | 36 | 32 |
| Example 7 Heteric Polyol 8 | 5049 | 2.48 | 4.4 | 41 | 29 | 28 |

Referring now to Table 1, infiltration time is dependent on the HLB value and the HLB value or the ratio of ethylene oxide to the overall polymer composition in the Heteric Polyol. Above an HLB value of 4, the measured infiltration time generally decreases (the treated water solution infiltrates faster) as the HLB value lowers. However, below an HLB value of 4, the measured infiltration time generally increases as the HLB value approaches zero. This relationship is observed in the heteric, heteric capped polyols, and heteric block polyols, and heteric polyols described above. This relationship between HLB and infiltration time varies with structure (e.g. capped vs. not capped) and is exemplified at the lower concentration gradient Examples 5,6 and 7 are not part of this invention.

As illustrated in Table 1, Heteric Polyols with the disclosed HLB ranges yield significantly improved infiltration times in comparison to untreated, deionized water; infiltration times go from days to seconds. In light of economic and phytotoxicity concerns where minute applications are desirable, the Wetting Compositions of Examples 1-7 are effective at markedly reduced concentrations, 2000 and 5000 ppm.

Referring now to Table 2, the infiltration time of polyether polyols correlates considerably with molecular weight. While maintaining a relatively constant HLB value, the measured infiltration time of the designed wetting agents decreases as the average molecular weight increases.

**TABLE 2**

| Example No. | HLB Value | Molecular Weight (g/mol) | Concentration in DI Water (ppm) | | |
|---|---|---|---|---|---|
| | | | 2000 | 5000 | 8000 |
| | | | Infiltration Time (sec) | | |
| Example 5 | 3 | 2803 | 50 | 37 | 33 |
| Example 1 | 2 | 3000 | 67 | 36 | 33 |
| Example 2 | 2.6 | 3000 | 55 | 36 | 34 |
| Example 3 | 3 | 3000 | 61 | 38 | 35 |
| Example 4 | 5.6 | 3000 | 289 | 105 | 71 |
| Example 8 | 3.8 | 3473 | 53 | 29 | 28 |
| Example 7 | 3 | 4129 | 67 | 36 | 32 |
| Example 9 | 4.4 | 5049 | 41 | 29 | 28 |
| Example 10 | 2.2 | 6000 | 39 | 29 | 27 |
| Example 11 | 5 | 6000 | 108 | 62 | 49 |

Referring now to Table 3, perhaps the most striking performance variable described in the subject disclosure is the relationship of Example wetting composition performance (infiltration time) to the date of Example dilution. That is, the infiltration time of compositions including the heteric polyol improves significantly upon aging. Without being bound by theory, it is believed that aging the wetting composition for an amount of time sufficient to increase the cloud point of the wetting composition to greater than 23°C significantly improves the wetting composition performance (infiltration time). It is observed that the Example wetting compositions which include the heteric polyol in deionized water visibly change overtime. Specifically, the opacity or visible clouding of the wetting composition comprising the heteric polyol and deionized water subtly increase or decrease after initial Example preparation. It is observed that the infiltration time of the Example wetting compositions is dependent on the amount of time that the Example wetting compositions are aged. As the amount of time that the Example wetting compositions increases from day 1 to 8 days, the resultant infiltration time decreases. This relationship is described by the data of Table 3, where the effect is noted at 2000, 5000 and 8000 ppm concentrations yielding reduced infiltration times by an average factor of 6, 3, and 2 respectively. Without being bound by theory, it is believed that the inherent solubility of the heteric polyol in water gradually increases with extended water-heteric polyol interaction time. It is also believed that the optimal time between sample preparation and sample application is a minimum of 4 to 24 hours; contingent upon variations with molecular weight and heteric polyol type.

**TABLE 3**

| Example No. | HLB Value | Molecular Weight (g/mol) | Hours | Concentration in DI Water (ppm) | | |
|---|---|---|---|---|---|---|
| | | | | 2000 | 5000 | 8000 |
| | | | | Infiltration Time (sec) | | |
| Example 2 | 2.6 | 3000 | 24 | 164 | 53 | 44 |
| | | | 192 | 55 | 36 | 34 |
| Example 9 | 4.4 | 5049 | 24 | 357 | 97 | 63 |
| | | | 192 | 41 | 29 | 28 |
| Example 10 | 2.2 | 6000 | 24 | 208 | 62 | 40 |
| | | | 192 | 39 | 29 | 27 |

The wetting composition of Example 5 at 2000 ppm heteric polyol, which includes Heteric Polyol 5 and DI water, is aged for at least 24 hours and tested on a hydrophobic medium (soil) to determine its impact on the drought survival of Kentucky bluegrass cultivar 'Kenblue' compared to Comparative Example 1. The wetting composition of Example 5 significantly improved the following (all improvements are statistically significant):
- Maintained a higher Soil Water Content (SWC) than Comparative Example 1 (a commercially available soil treatment composition);
- Reduced the rate of evapotranspiration;
- Maintained a higher leaf Relative Water Content (RWC) than control (just water);
- FV/FM (photosynthesis mechanism) health was elevated compared to the control; and
- Chlorophyll content was higher than control.

To test the performance of Material and Methods, the wetting composition of Example 5, Comparative Example 1, and the Control Example, the following materials and methods were employed:
- Seeds of Kentucky bluegrass cultivar 'Kenblue' were sown in 40 cm PVC tubes (10 cm diameter) filled with sandy loam soil (sand 71%: silt 17 %: clay 12%) and allowed to establish in greenhouse condition for one month. The plants were transferred to an environmentally controlled growth chamber one week before applying the treatments. The conditions of chamber were maintained at average day/night temperature of 23°C and 60% relative humidity and included a light level of 400 µmol m-2 s-1 with a 14 h photoperiod throughout the duration of the study.
- Testing included two watering treatments: well watered and drought with four replications. The pots were randomized within water and drought treatments. The Examples were applied as foliar spray using a hand held sprayer and watered down into the soil with 200 ml deionized water for both drought and watered treatments. Irrigation was completely withheld for the drought treatments for the whole duration of study. Well-watered treatments were irrigated using 200 ml of deionized water and/or half strength Hoagland's nutrient solution on alternate days.
- Example 5 was tested at 109, 218, and 435 Oz./Acre while Comparative Example 1 was tested at 435 Oz./Acre as recommended by the commercial supplier.
- Soil water content (SWC): The soil volumetric water content (SVC) were measured using a 12 cm long TDR soil moisture meter probe (TDR 100; Spectrum Technologies, Plainfield, IL).
- Relative water content (RWC): Leaf RWC was calculated as (FW - DW)/(TW - DW)^{∗}100. Fresh wt of leaves was determined by weighing them immediately after harvest. Turgid wt was determined by soaking the leaves overnight in deionized water. Dry wt was obtained by oven drying the leaves for 72 hours.
- Turf quality (TQ): TQ was visually rated based on color, density, and uniformity of the grass using a scale of 1 to 9. (9 = fully turgid, dense green canopy, 1 = completely dead plants).
- Fv/Fm and Yield (PSII): Fv/Fm and Quantum Photosynthetic Yield (ΔF/Fm') or Y(II) are common parameters used for stress measurement. Fv/Fm is a dark adapted measurement that reveals the maximum quantum efficiency of PSII under existing stress conditions. Yield of PSII is taken at steady state photosynthetic conditions to measure the actual achieved quantum efficiency under existing stress conditions. Fv/Fm and Yield were measured using a chlorophyll fluorometer OSp5 (Opti-Sciences, Inc).
- CTD (Canopy Temperature Difference) (0C): CTD was calculated for estimating the effect of drought on leaf temperature using the formula (ambient temperature - leaf temperature) using an IR Crop Temperature Meter (Spectrum Technologies) held at a 45 degree angle at a constant distance (0.6 m) from the turf canopy for each plant.
- Chlorophyll content (mg/m2): Chlorophyll content of leaves was determined using CCM 300 (Opti sciences Inc).
- Evapotranspiration (ET): The pots were weighed on every measurement day for the entire duration of the study. The difference in pot weight (gm) is used as an indicator of water loss from soil.
- Root dry wt (mg): Roots were washed free from soil after the study and dried in oven for 72 hours.

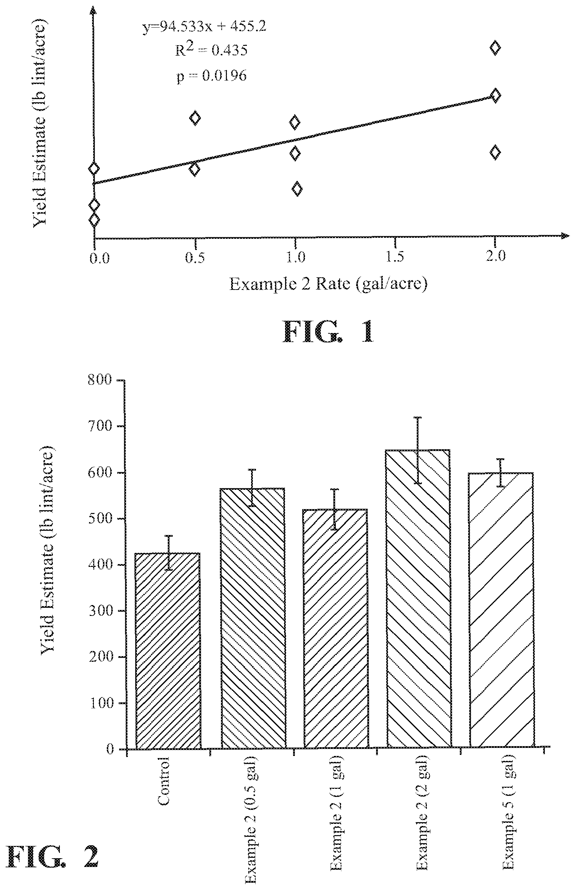

The wetting compositions of Examples 2 and 5 at 2000 ppm heteric polyol, which include Heteric Polyols 2 and 5 and DI water, are aged for at least 24 hours and tested on a hydrophobic medium (soil) to determine the impact on cotton yield. The test results, which are described in Figures 1 and 2 below, demonstrate that soil treated with the wetting compositions of Examples 2 and 5 are effective water management agents in this particular application (Cotton) which increase cotton yield (lb lint/acre) over the yield of soil which is not treated with these wetting compositions.

Referring now to Figure 1, the application of Example 2 to soil increases the yield of cotton produced by cotton plant grown in that soil. In Figure 2, Referring now to Figure 2, soil treated with Examples 2 and 5 demonstrates significantly improved cotton yield (lb lint/acre) relative to the cotton yield of the control (untreated soil). Treatment of soil with Example 2 was particularly effective at 0.5, 1, and 2 gal/acre, and treatment of soil with Example 5 was particularly effective at 1 gal/acre. In fact, Example 2 achieved a 20% cotton yield increase.

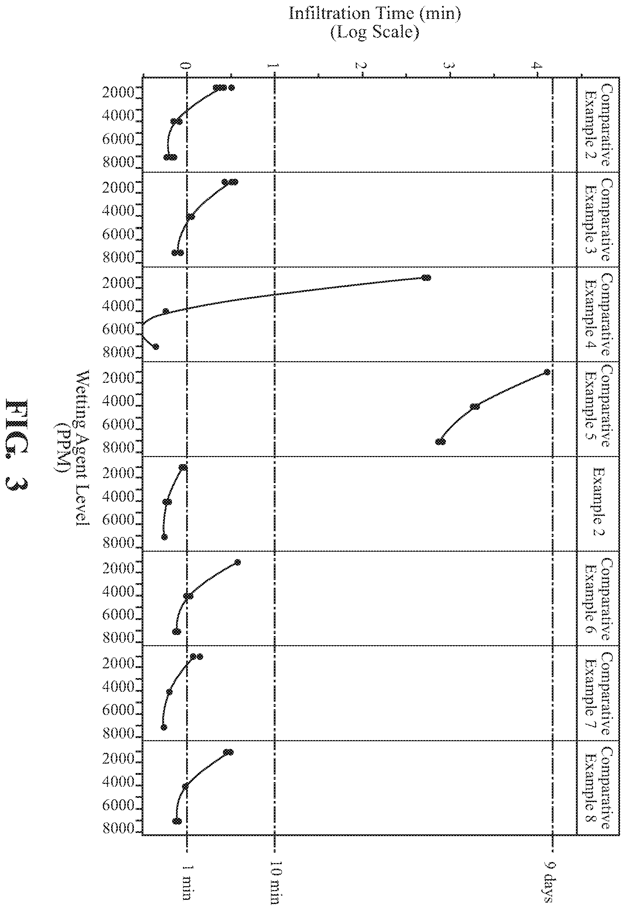

The wetting compositions of Example 2 at concentrations of 2000, 4000, and 6000 are aged for at least 24 hours and tested on a hydrophobic medium (soil) to determine the infiltration time. Comparative Examples 2-8 are commercial agricultural wetting agents that are tested for comparative purposes. Referring now to Figure 3, the water infiltration time of soil treated with the wetting compositions of Example 2 and Comparative Examples 2-8 are set forth. The wetting compositions of Example 2 are very effective at increasing the wetting rate of the soil. As such, soil treated with Example 2 will absorb more water and retain more water over time, increasing crop yield.

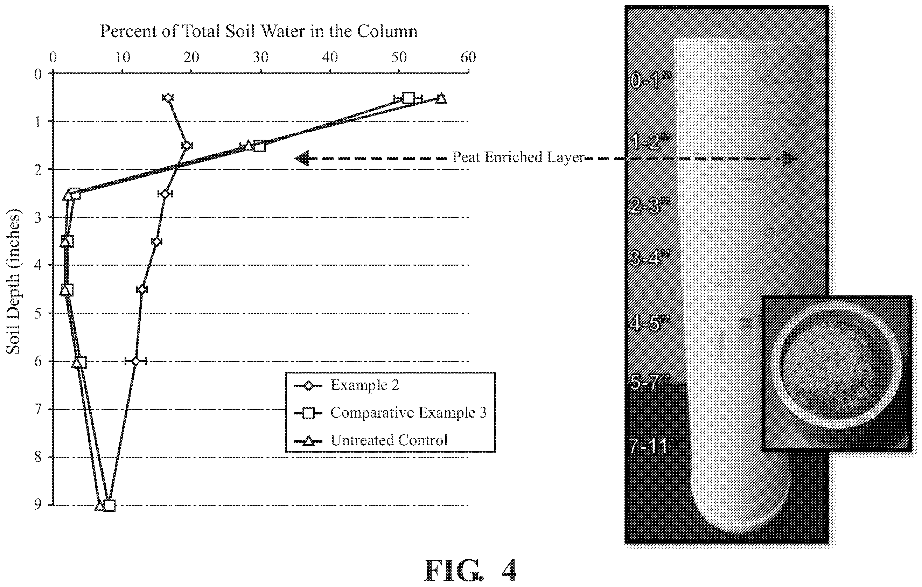

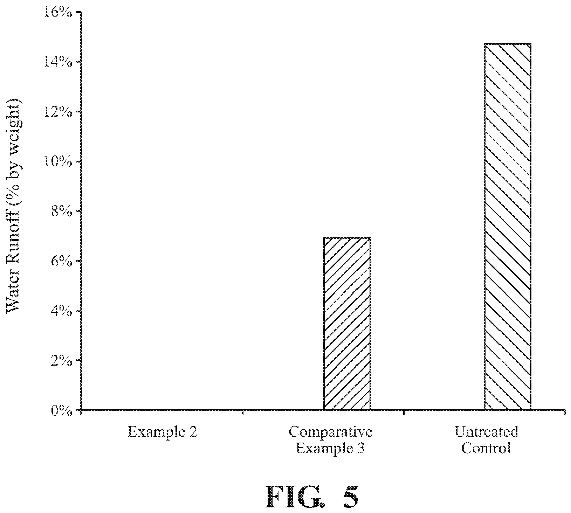

Referring now to Figures 4 and 5, the infiltration depth of the water runoff properties of Example 2, Comparative Example 3, and a Control (just water) are set forth. Runoff is measured with 12" PVC columns packed with a mixture of 95% sand and 5% screened sphagnum peat. Between a depth of 1 and 2 inches from the top of the column, a layer of 100 % sphagnum peat is packed. The top inch of the column continued the sand, peat mixture. The prepared column was then treated with the wetting composition in the prescribed amount and at the prescribed concentration. Once prepared, the wetting composition (at the prescribed concentration) is applied to the column in an amount of 100 mL solutions of deionized water, where the tested wetting agent is prepared to 0.1% active ingredient. Of course, an untreated control, i.e., deionized water is also typically tested for comparative purposes. Wetting efficacy is determined by the measured depth of infiltration throughout the column and the percent of total soil water measured at each layer of the column. Percent of total soil water is calculated gravimetrically for each layer by measuring the pre- and post- treated weight of each layer disassembled. Water loss due to runoff is determined by the average percent of water absent from the total moisture of the column given the total weight of the treated solution.

Referring now to Figure 4, the infiltration depth of the wetting composition of Example 2, Comparative Example 3, and a Control (just water) are set forth. The wetting composition of Example 2 is very effective at penetrating the soil. Figure 4 shows that water is distributed evenly in soil treated with Example 2 while soil treated with Comparative Example 3 and untreated soil have a much higher concentration of water at the surface.

Water loss due to runoff as used herein is measured with a 12 inch PVC column packed with a mixture of 95% sand and 5% screened sphagnum peat. At a depth of 1 to 2 inches from the top of the column, a layer of 100 % sphagnum peat is packed while the top inch of the column is packed with a the sand/peat mixture described above. Once prepared, the wetting composition (at the prescribed concentration) is applied to the column in an amount of 100 mL solutions of deionized water, where the tested wetting agent is prepared to 0.1% active ingredient. Of course, an untreated control, i.e., deionized water is also typically tested for comparative purposes. Wetting efficacy is determined by the measured depth of infiltration throughout the column and the percent of total soil water measured at each layer of the column. Percent of total soil water is calculated gravimetrically for each layer by measuring the pre- and post- treated weight of each layer disassembled. Water loss due to runoff is determined by the average percent of water absent from the total moisture of the column given the total weight of the treated solution.

Referring now to Figure 5, Example 2 allows greater penetration through hydrophobic soil, reduces surface pooling and runoff due to more rapid infiltration, and demonstrates improved performance over Comparative Example 3. Soil treated with Example 2 demonstrates practically zero water loss to runoff. That is, the wetting composition of Example 2 is very effective at minimizing water runoff.

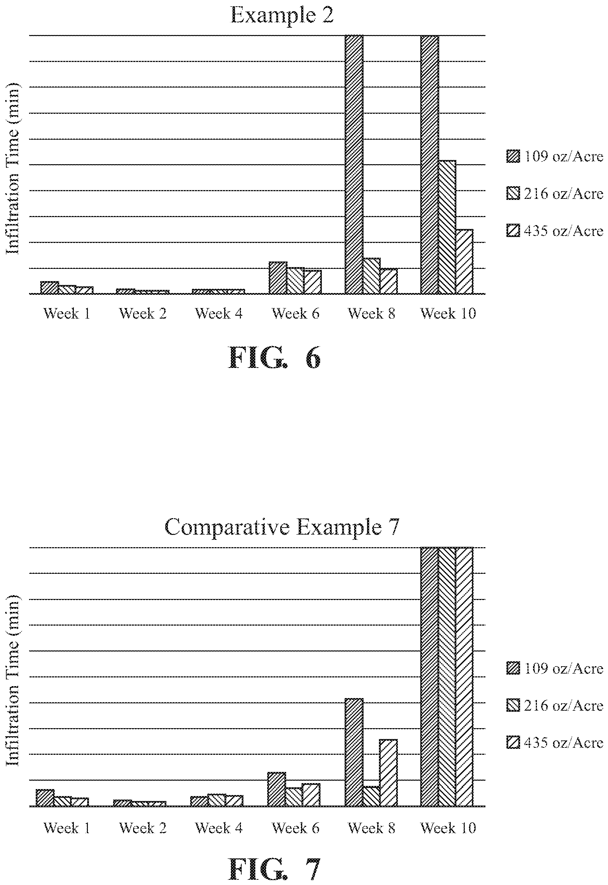

Referring now to Figures 6 and 7, once applied to hydrophobic media, the wetting composition of Example 2 functions to increase the infiltration time and slow the rate of evaporation or loss of water from the hydrophobic media thereafter. That is, even after evaporation or loss of water, the residual heteric polyol remains in the hydrophobic media. As such, the residual heteric polyol remaining in the hydrophobic media allows absorption and retention of water subsequently applied to the hydrophobic media.

Still referring to Figures 6 and 7, soil treated with 109, 216, and 435 Oz./Acre of Example 2 allows for the almost immediate penetration of water through six weeks while soil treated with 216 and 435 Oz./Acre of Example 2 allows for the almost immediate penetration of water through 10 weeks. That is, soil treated with Example 2 readily allows the penetration of water for times of 10 weeks or greater, i.e. the treatment is effective for long periods of time, e.g. an entire growing season. In contrast, soil treated with 109, 216, and 435 Oz./Acre of Comparative Example 7 does not readily allow the penetration of water into the soil through 10 weeks.

It is to be understood that the appended claims are not limited to express any particular compounds, compositions, or methods described in the detailed description, which may vary between particular embodiments which fall within the scope of the appended claims. With respect to any Markush groups relied upon herein for describing particular features or aspects of various embodiments, it is to be appreciated that different, special, and/or unexpected results may be obtained from each member of the respective Markush group independent from all other Markush members. Each member of a Markush group may be relied upon individually and or in combination and provides adequate support for specific embodiments within the scope of the appended claims.

It is also to be understood that any ranges and subranges relied upon in describing various embodiments of the present disclosure independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present disclosure, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

## Claims

1. A process for increasing the wetting rate of hydrophobic media with a wetting composition, said process comprising the steps of:
(A) combining water and a heteric polyol to form the wetting composition, the heteric polyol having the following formula:
X[Y(CH₂CH₂O)ₐ(CH₂CHCH₃O)_{b}H]_{c}
wherein
X is an organic core derived from an initiator having at least two hydroxyl groups,
Y is a heteric copolymer comprising at least two different alkyleneoxy units selected from the group of ethyleneoxy units, propyleneoxy units, and butyleneoxy units,
the subscripts a and b are independently zero or a positive integer and at least one of a or b must be a positive integer, and
the subscript c is an integer of two or greater;
wherein the heteric polyol has an HLB value of from 2 to 6, calculated based on William C. Griffin's formula for non-ionic surfactants, and a number average molecular weight (Mₙ) of from 1,000 to 6,000 g/mol, and a hydroxyl functionality of two or greater; where molecular weight is determined using the methods described in the present specification
(B) aging the wetting composition for at least 4 hours to increase the cloud point of the wetting composition to greater than 23°C; and
(C) applying the wetting composition to the hydrophobic media.

2. A process as set forth in claim 1 wherein Y comprises heteric and uniform blocks of ethyleneoxy units and propyleneoxy units.

3. A process as set forth in any preceding claim wherein Y comprises ethyleneoxy units in an amount of from 2 to 35 percent by weight, based on 100 parts by weight of the reactants reacted to form the heteric polyol.

4. A process as set forth in any preceding claim wherein the heteric polyol has a hydroxyl functionality of 3.

5. A process as set forth in claim 4 wherein the initiator is glycerine.

6. A process as set forth in any preceding claim wherein the heteric polyol comprises the ethyleneoxy units and propyleneoxy units in a molar ratio of from 1:25 to 1:4.

7. A process as set forth in any preceding claim wherein the heteric polyol comprises the reaction product of:
(i) 3% by weight of a trifunctional alcohol,
(ii) 10 to 15% by weight of ethylene oxide, and
(iii) 82 to 87% by weight of propylene oxide,
wherein the % by weight of components (i)-(iii) is based on 100 parts by weight of the reactants reacted to form the heteric polyol.

8. A process as set forth in any preceding claim wherein the heteric polyol is capped with from 2 to 20 percent by weight propyleneoxy units based on 100 parts by weight of the reactants reacted to form the heteric polyol.

9. A process as set forth in any preceding claim wherein the wetting composition comprises from 2,000 to 8,000 ppm of the heteric polyol.

10. A process as set forth in any preceding claim wherein the hydrophobic media comprises soil, sand, peat, or combinations thereof.

11. A process as set forth in any preceding claim wherein aging the wetting composition for an amount of time sufficient to increase the cloud point of the wetting composition to greater than 23°C is at least 24 hours.

12. A process as set forth in any preceding claim wherein the step of applying the wetting composition to the hydrophobic media is further defined as applying the heteric polyol in an amount of from 3.5 to 35 kg/ha (50 to about 500 Oz./acre).

13. A process as set forth in any preceding claim wherein the step of applying the wetting composition to the hydrophobic media is further defined as applying the heteric polyol in an amount of from 3.5 to 14 kg/ha (50 to about 200 Oz./acre).

14. A process as set forth in claim 13 wherein the wetting composition has a hydrophobic media infiltration rate of less than 1 minute, measured using the test method described in the present specification.

15. A process as set forth in claim 13 wherein the wetting composition has a water loss due to runoff of less than 5 percent, measured using the test method described in the present specification.

## Patentansprüche

1. Verfahren zur Erhöhung der Benetzungsrate von hydrophoben Medien mit einer Benetzungs-Zusammensetzung, wobei das Verfahren die Schritte umfasst:
(A) Kombinieren von Wasser und einem heterischen Polyol zur Bildung der Benetzungs-Zusammensetzung, wobei das heterische Polyol die folgende Formel aufweist:
X[Y(CH₂CH₂O)ₐ(CH₂CHCH₃O)_{b}H]_{c}
worin
X ein organischer Kern ist, der von einem Starter mit mindestens zwei Hydroxyl-Gruppen abgeleitet ist,
Y ein heterisches Copolymer ist, umfassend mindestens zwei verschiedene Alkylenoxy-Einheiten, ausgewählt aus der Gruppe von Ethylenoxy-Einheiten, Propylenoxy-Einheiten und Butylenoxy-Einheiten,
die Indizes a und b unabhängig Null oder eine positive ganze Zahl sind und mindestens eines von a oder b eine positive ganze Zahl sein muss, und
der Index c eine ganze Zahl von zwei oder mehr ist;
wobei das heterische Polyol einen HLB-Wert von 2 bis 6, berechnet basierend auf William C. Griffins Formel für nichtionische Tenside, und ein zahlenmittleres Molekulargewicht (Mₙ) von 1000 bis 6000 g/Mol aufweist, und eine Hydroxyl-Funktionalität von zwei oder mehr; wobei das Molekulargewicht unter Verwendung der in der vorliegenden Beschreibung beschriebenen Verfahren bestimmt wird,
(B) Altern der Benetzungs-Zusammensetzung für mindestens 4 Stunden, um den Trübungspunkt der Benetzungs-Zusammensetzung auf mehr als 23°C zu erhöhen; und
(C) Aufbringen der Benetzungs-Zusammensetzung auf die hydrophoben Medien.

2. Verfahren nach Anspruch 1, wobei Y heterische und einheitliche Blöcke von Ethylenoxy-Einheiten und Propylenoxy-Einheiten umfasst.

3. Verfahren nach einem vorangehenden Anspruch, wobei Y Ethylenoxy-Einheiten in einer Menge von 2 bis 35 Gew.-%, bezogen auf 100 Gewichtsteile der umgesetzten Reaktanten, um das heterische Polyol zu bilden, umfasst.

4. Verfahren nach einem vorangehenden Anspruch, wobei das heterische Polyol eine Hydroxyl-Funktionalität von 3 aufweist.

5. Verfahren nach Anspruch 4, wobei der Starter Glycerin ist.

6. Verfahren nach einem vorangehenden Anspruch, wobei das heterische Polyol die Ethylenoxy-Einheiten und Propylenoxy-Einheiten in einem Molverhältnis von 1:25 bis 1:4 umfasst.

7. Verfahren nach einem vorangehenden Anspruch, wobei das heterische Polyol das Reaktionsprodukt umfasst von:
(i) 3 Gew.-% eines trifunktionellen Alkohols,
(ii) 10 bis 15 Gew.-% Ethylenoxid und
(iii) 82 bis 87 Gew.-% Propylenoxid,
wobei der Gewichtsprozentsatz der Komponenten (i)-(iii) auf 100 Gewichtsteile der unter Bildung des heterischen Polyols umgesetzten Reaktanten bezogen ist.

8. Verfahren nach einem vorangehenden Anspruch, wobei das heterische Polyol mit einer Obergrenze von 2 bis 20 Gew.-% Propylenoxy-Einheiten, bezogen auf 100 Gewichtsteile der unter Bildung des heterischen Polyols umgesetzten Reaktanten, versehen ist.

9. Verfahren nach einem vorangehenden Anspruch, wobei die Benetzungs-Zusammensetzung von 2000 bis 8000 ppm des heterischen Polyols umfasst.

10. Verfahren nach einem vorangehenden Anspruch, wobei die hydrophoben Medien Erde, Sand, Torf oder Kombinationen davon umfassen.

11. Verfahren nach einem vorangehenden Anspruch, wobei das Altern der Benetzungs-Zusammensetzung für eine ausreichende Zeitspanne, um den Trübungspunkt der Benetzungs-Zusammensetzung auf mehr als 23°C zu erhöhen, mindestens 24 Stunden beträgt.

12. Verfahren nach einem vorangehenden Anspruch, wobei der Schritt zum Aufbringen der Benetzungs-Zusammensetzung auf die hydrophoben Medien weiterhin als das Aufbringen des heterischen Polyols in einer Menge von 3,5 bis 35 kg/ha (50 bis etwa 500 Oz./Acre) definiert ist.

13. Verfahren nach einem vorangehenden Anspruch, wobei der Schritt zum Aufbringen der Benetzungs-Zusammensetzung auf die hydrophoben Medien weiterhin als das Aufbringen des heterischen Polyols in einer Menge von 3,5 bis 14 kg/ha (50 bis etwa 200 Oz./Acre) definiert ist.

14. Verfahren nach Anspruch 13, wobei die Benetzungs-Zusammensetzung eine Infiltrationsrate für hydrophobe Medien von weniger als 1 Minute aufweist, gemessen unter Verwendung des in der vorliegenden Beschreibung beschriebenen Testverfahrens.

15. Verfahren nach Anspruch 13, wobei die Benetzungs-Zusammensetzung einen Wasserverlust aufgrund von Abfluss von weniger als 5 Prozent aufweist, gemessen unter Verwendung des in der vorliegenden Beschreibung beschriebenen Testverfahrens.

## Revendications

1. Procédé d'augmentation du taux de mouillage de milieux hydrophobes avec une composition mouillante, ledit procédé comprenant les étapes de :
(A) combinaison d'eau et d'un polyol hétérique pour former la composition mouillante, le polyol hétérique ayant la formule suivante :
X[Y(CH₂CH₂O)ₐ(CH₂CHCH₃O)_{b}H]_{c}
dans laquelle
X est un noyau organique dérivé d'un initiateur ayant au moins deux groupes hydroxyle,
Y est un copolymère hétérique comprenant au moins deux motifs alkylénoxy différents choisis dans le groupe de motifs éthylénoxy, motifs propylénoxy et motifs butylénoxy,
les indices a et b sont indépendamment zéro ou un entier positif et au moins l'un de a ou b doit être un entier positif, et
l'indice c est un entier de deux ou plus ;
dans lequel le polyol hétérique présente un indice HLB de 2 à 6, calculé sur la base de la formule de William C. Griffin pour des tensioactifs non ioniques, et un poids moléculaire moyen en nombre (Mₙ) de 1 000 à 6 000 g/mol, et une fonctionnalité hydroxyle de deux ou plus ; où le poids moléculaire est déterminé au moyen des procédés décrits dans la présente spécification ;
(B) vieillissement de la composition mouillante pendant au moins 4 heures pour augmenter le point de trouble de la composition mouillante à plus de 23 °C ; et
(C) application de la composition mouillante sur les milieux hydrophobes.

2. Procédé selon la revendication 1, dans lequel Y comprend des blocs hétériques et des blocs uniformes de motifs éthylénoxy et de motifs propylénoxy.

3. Procédé selon l'une quelconque des revendications précédentes dans lequel Y comprend des motifs éthylénoxy en une quantité de 2 à 35 pour cent en poids, sur la base de 100 parties en poids des réactifs ayant réagi pour former le polyol hétérique.

4. Procédé selon l'une quelconque des revendications précédentes dans lequel le polyol hétérique a une fonctionnalité hydroxyle de 3.

5. Procédé selon la revendication 4, dans lequel l'initiateur est la glycérine.

6. Procédé selon l'une quelconque des revendications précédentes, dans lequel le polyol hétérique comprend des motifs éthylénoxy et des motifs propylénoxy dans un rapport molaire de 1:25 à 1:4.

7. Procédé selon l'une quelconque des revendications précédentes, dans lequel le polyol hétérique comprend le produit de réaction de :
(i) 3 % en poids d'un alcool trifonctionnel,
(ii) 10 à 15 % en poids d'oxyde d'éthylène, et
(iii) 82 à 87 % en poids d'oxyde de propylène,
dans lequel le % en poids de composants (i) à (iii) est sur la base de 100 parties en poids des réactifs ayant réagi pour former le polyol hétérique.

8. Procédé selon l'une quelconque des revendications précédentes, dans lequel le polyol hétérique est coiffé avec 2 à 20 pour cent en poids de motifs propylénoxy sur la base de 100 parties en poids des réactifs ayant réagi pour former le polyol hétérique.

9. Procédé selon l'une quelconque des revendications précédentes, dans lequel la composition mouillante comprend de 2 000 à 8 000 ppm du polyol hétérique.

10. Procédé selon l'une quelconque des revendications précédentes, dans lequel le milieu hydrophobe comprend un sol, du sable, de la tourbe, ou des combinaisons de ceux-ci.

11. Procédé selon l'une quelconque des revendications précédentes, dans lequel le vieillissement de la composition mouillante pendant une durée suffisante pour augmenter le point de trouble de la composition mouillante à plus de 23 °C est d'au moins 24 heures.

12. Procédé selon l'une quelconque des revendications précédentes, dans lequel l'étape d'application de la composition mouillante sur le support hydrophobe est en outre définie comme étant l'application du polyol hétérique en une quantité de 3,5 à 35 kg/ha à environ 500 onces/acre).

13. Procédé selon l'une quelconque des revendications précédentes, dans lequel l'étape d'application de la composition mouillante sur le support hydrophobe est en outre défini comme étant l'application du polyol hétérique en une quantité de 3,5 à 14 kg/ha à environ 200 onces/acre).

14. Procédé selon la revendication 13, dans lequel la composition mouillante présente un taux d'infiltration de support hydrophobe inférieur à 1 minute, mesuré en utilisant le procédé d'essai décrit dans la présente spécification.

15. Procédé selon la revendication 13, dans lequel la composition mouillante présente une perte d'eau due au ruissellement inférieure à 5 pour cent, mesurée au moyen du procédé d'essai décrit dans la présente spécification.
